# EUROPEAN PATENT APPLICATION

(11) **EP 4 361 868 A1**
(43) Date of publication of application: **01.05.2024**
(21) Application number: 23203412.4
(22) Date of filing: 13.10.2023
(51) Int. Cl.: G06F 21/62, G06F 16/21, G06F 16/27

(54) **ACCESS CONTROLS FOR MODELLED CONTENT USING NAMESPACES**

(30) Priority: 27.10.2022 US 202217975174
(71) Applicant: SAP SE, 69190 Walldorf (DE)
(72) Inventor: Buchmann, Daniel, 69190 Walldorf (DE); Balzar, Andreas, 69190 Walldorf (DE); Pommier, Laurent, 69190 Walldorf (DE)
(74) Representative: Müller-Boré & Partner Patentanwälte PartG mbB

(57) **Abstract**

Techniques and solutions are provided for organizing and controlling access/operations with respect to computing objects, such as a definition of a computing object or data associated with an instance of a defined computing object. A collection of computing objects is associated with a namespace, the namespace having a namespace identifier. At least a first set of access rights is associated with the namespace, such as access rights of a first tenant, representing a computing environment to which the computing objects of the namespace may be deployed. The access rights specify permitted/prohibited operations with respect to the computing objects, such as whether the computing objects are available on a read-only basis or whether create, update, or delete operations are also allowed. A namespace can have multiple tenant accessors, where different tenants can have different access rights for a given namespace.

## Description

### FIELD

The present disclosure generally relates to managing modelled content. Particular implementations relate to defining namespaces to distinguish sets of modelled content objects and provide differential access rights to the namespaces.

### BACKGROUND

Software systems are increasingly diverse and complex. For example, many software applications use stored data, which may be stored in a database, such as a relational database. However, accessing data in a relational database can be cumbersome for non-technical users, and it may be beneficial to add semantics and functionality to the database data that can be used by a variety of applications or application processes. In addition, it may not be desirable for many users to have direct access to data at the level of the database. Accordingly, a variety of software layers can exist "above" the database level. Objects in these layers can refer to objects in lower-level layers, as well as referring to other objects in a same layer.

Many software layers involve modelled content. For example, a data model can define different types of data objects, which can range from simple data objects that define how data is stored, such as in columns having particular names, to more complex data objects that define data associated with the object and additional information, such as calculations to be performed or information about how data associated with the data object should be displayed.

An application available to an end user may use modelled content from multiple sources. For example, a software company providing an enterprise resource planning solution may provide a "base" data model, such as database tables and views, as well as higher-level data objects used to interact with database level objects. That base data model may be further tailored by another group in the software company for a particular use scenario. Third parties may add additional modelled content, as may a tenant associated with an end user.

Thus, correct operation of software by an end user relies upon a complex arrangement of modelled content. While it can be important to allow different tenants, including tenants in a multi-tenant computing system, to enhance base content, it is also important to maintain the integrity of particular "sets" of modelled content. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Techniques and solutions are provided for organizing and controlling access/operations with respect to computing objects, such as a definition of a computing object or data associated with an instance of a defined computing object. A collection of computing objects is associated with a namespace, the namespace having a namespace identifier. At least a first set of access rights is associated with the namespace, such as access rights of a first tenant, representing a computing environment to which the computing objects of the namespace may be deployed. The access rights specify permitted/prohibited operations with respect to the computing objects, such as whether the computing objects are available on a read-only basis or whether create, update, or delete operations are also allowed. A namespace can have multiple tenant accessors, where different tenants can have different access rights for a given namespace.

In one aspect, the present disclosure provides a process of defining a namespace and registering the namespace in a namespace registry. A first collection of a first plurality of computing objects is created. A given computing object of the first plurality of computing objects is associated with a model. A first namespace is defined, the first namespace including the first plurality of computing objects and a first namespace identifier. The first namespace is registered in a namespace registry. The namespace registry includes, for respective namespaces of a plurality of namespaces, the plurality of namespaces including the first namespace, a namespace identifier and edit state identifier. The edit state identifier indicates an ability of an accessor to modify or delete objects associated with a respective namespace.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram of a database schema showing technical relationships between at least a portion of database tables in the schema.
FIG. 2 is a schematic diagram illustrating relationships between table elements that can be included in a data dictionary, or otherwise used to define database tables.
FIG. 3 a schematic diagram illustrating components of a data dictionary and components of a database layer.
FIG. 4 is code for an example metadata model for a database view of a virtual data model.
FIG. 5 is code for an example metadata model for a view of a virtual data model, and for metadata models which modify or refer to such example metadata model.
FIG. 6 is a diagram of a computing environment illustrating how a virtual data model can interact with a database system.
FIG. 7 is a block diagram depicting a schema for a logical data object.
FIG. 8 is a diagram illustrating how different tenants, which can be unique to a particular computing system or where a computing system can provide a multi-tenant environment, can have different namespaces, and where namespaces can be shared between tenants.
FIG. 9 is a diagram illustrating various types of namespaces, including depicting how namespaces can have nested relationships, as well as how a tenant can have a local namespace registry or be in communication with a global namespace registry.
FIG. 10 illustrates an example data model for namespace registry information and a table implementing such data model.
FIG. 11 is a flowchart of an example namespace definition and registration process.
FIG. 12 is a diagram of an example computing system in which some described embodiments can be implemented.
FIG. 13 is an example cloud computing environment that can be used in conjunction with the technologies described herein.

### DETAILED DESCRIPTION

### Example 1 - Overview

Software systems are increasingly diverse and complex. For example, many software applications use stored data, which may be stored in a database, such as a relational database. However, accessing data in a relational database can be cumbersome for non-technical users, and it may be beneficial to add semantics and functionality to the database data that can be used by a variety of applications or application processes. In addition, it may not be desirable for many users to have direct access to data at the level of the database. Accordingly, a variety of software layers can exist "above" the database level. Objects in these layers can refer to objects in lower-level layers, as well as referring to other objects in a same layer.

Many software layers involve modelled content. For example, a data model can define different types of data objects, which can range from simple data objects that define how data is stored, such as in columns having particular names, to more complex data objects that define data associated with the object and additional information, such as calculations to be performed or information about how data associated with the data object should be displayed.

An application available to an end user may use modelled content from multiple sources. For example, a software company providing an enterprise resource planning solution may provide a "base" data model, such as database tables and views, as well as higher-level data objects used to interact with database level objects. That base data model may be further tailored by another group in the software company for a particular use scenario. Third parties may add additional modelled content, as may a tenant associated with an end user.

Thus, correct operation of software by an end user relies upon a complex arrangement of modelled content. While it can be important to allow different tenants, including tenants in a multi-tenant environment, to enhance base content, it is also important to maintain the integrity of particular "sets" of modelled content. Accordingly, room for improvement exists.

Particularly given the increasing complexity of software and its associated content, it is becoming more common for software providers to provide "managed content" to their customers. Previously, a customer might be expected to install a program, which may have some pre-defined content, and then manually add or change such content. A customer might be expected to modify or add content on their own, or be responsible for integrating any changes that might be made available by the software company. In a managed content scenario, the software company can take greater responsibly in providing and updating software content, as opposed to simply providing an application that operates using content defined by the customer or obtained by the customer from another source.

Because multiple entities, or "tenants," can provide content, particularly in managed content scenarios, it can be important to track what tenant serves as a source of content and has full editing rights to content, or otherwise provide different access levels to different users of various tenants. In particular, it may be desirable to restrict editing of modelled content, such as to users or processes of a source or "owner" of the modelled content. In some cases, it may be possible to make an indication of ownership or access restrictions as part of the modelled content itself. For example, modelled content is often provided as a "package," such as a "repository package," which can include information such as data object definitions, instances of such data objects that include data, configuration data (such as to be used in processing modelled content, or affecting the behavior of a software application of an end user). One option, then, is to include access restrictions in the package that is delivered to a tenant.

However, including access restrictions in a package may be problematic, at least in part because a given package may be provided to different tenants, who may have different access rights to the package. For instance, it may be desired to have the package editable by the owner/creator tenant of the package, including as it is installed at a customer computing system (a different tenant). Or, there may be multiple groups (each group being a tenant) within a particular software company, where some groups should have editing access to a particular package and others should not. While in some cases differing access rights can be specified for a package when a package is deployed, this can be cumbersome to implement, as when the deployment occurs it may not be known whether the receiving system (tenant) should be provided with full access rights, limited access rights, or no access rights (that is, "read only" access).

The present disclosure helps address these issues through the use of "namespace" information. A namespace refers to a grouping of content useable by an application, where the content can be as has been described - data objects, data object instances with associated data, or configuration data. A particular type of content is "modelled content," which generally refers to a set of data objects that define how data is stored, and optionally processed, that is separate from data objects that actually store data according to the definition. The relationships between "models" and "concrete" data objects can be similar to the relationship between the definition of a class (or other abstract data type, or a composite data type) and an instance of the class.

A namespace typically includes at least an identifier of the namespace. In a registry where namespaces are defined and persisted, the namespace identifier can optionally be associated with another identifier, such as a UUID. Associating a secondary identifier with a namespace can be useful, for example, in situations where namespace information for multiple tenants can be maintained, in case two tenants may use the same "primary" (from their perspective) namespace identifier. In some implementations, a name of a namespace can be included in data objects (such as data object definitions) in the namespace, including as part of a key for a particular data object.

As will be further described, namespace information can be maintained in one or more ways. In one way, namespace information is included in content of the namespace, such as in a definition of a data object of the namespace. In another way, namespace information can be maintained in a registry. Often, multiple tenants may have access to a namespace, or it can otherwise be beneficial to share namespace information among tenants. In these cases, a global namespace registry can be made available to multiple clients/computing systems.

In practice, namespace information can be used to dynamically restrict or allow access to namespace content. The restrictions can be full or partial, both in terms of the actions that are allowed and in terms of the affected data objects. That is, a namespace can specify restrictions for particular types of data objects or other content (particularly modelled content) of a set of objects, such as those in a package, but specify no restrictions or different restrictions for other content types.

Restrictions can specify particular types of operations that are allowed or are not allowed. While read operations are generally allowed, it may be desired to disallow changes to a "base" version of content, or deletion of content. For example, some data objects, such as views in a virtual data model or even relational database tales, can be "extended." Extensions can add additional attributes to those specified in a "base" version, or add relationships to other data objects. However, to the extent extensions might delete or modify information in the "base" version of content, it may be desirable to be restricted or disallowed. For example, changing the datatype of a base element may be subject to restrictions. It may be desirable in some scenarios to allow new data objects to be added to a set covered by a namespace, while in other scenarios it may be desirable to prohibit even the addition of content to a namespace. In the case where extensions are prohibited in one namespace, such as a namespace of imported content, extensions can be implemented in another namespace to which the tenant has sufficient access rights.

So, when a request to modify (or take other action with respect to) an object is made (the remainder of the present disclosure will use the term "object" for convenience of presentation, but unless indicated otherwise, or because the nature of a data object differs from other types of content, it should be appreciated that the discussion can apply to other content types), programmatic logic can determine whether the data object is associated with a namespace and, if so, determine whether the request is from a user or computing system that is permitted to modify objects in the namespace. Similar actions can be taken in response to requests to add data objects to a namespace, or requests to delete data objects from a namespace.

In addition to analyzing "modelling" type actions, actions regarding data in data objects can also be analyzed using namespace information. For example, both a definition of a data object and data in an instance of the data object can be restricted from create, update, or delete operations. Similarly, consider a JOIN operation in a query language. If the JOIN operation is part of an overall query language statement that modifies data associated with a table or view in a namespace, and a user submitting the request does not have suitable access rights, the JOIN operation may not be executed, and a permissions error optionally returned in response to the request for the operation that included the JOIN.

While some tenants may be restricted from modifying the definitions of data objects, in many cases the data objects are designed for use by such tenant. That is, users of the tenant may be expected to perform CRUD operations with respect to data in an instance of a data object whose definition is restricted. However, for other data objects, it may be desirable to restrict a particular tenant from modifying the definition of the data object, as well as data provided in an instance of the data object. For example, a particular package may include configuration data for a tenant in a configuration data object. Since the configuration data can affect how other data objects in a namespace are used, or the functioning of a software application, it can be useful to prohibit tenants from modifying the configuration data.

As will be further described, "objects" as used herein include "data objects," which define a schema for storing or accessing data, where an object directly stores the data (such as a database table) or can be used to access the data but may not store (or at least persistently store) the data, such as a view of a virtual data model. "Objects" can also be referred to as computing objects or modelled content objects. A given repository in a computing system can comprise multiple objects or "artifacts" with the same or different types.

As used herein, an "object" (or "data object") refers to a computing object that includes a definition of data (such as data members, which can be variables of various types) and one or more methods to be performed on the data. Examples of objects include instances of abstract data types (such as a "class"). Note that the operations on data need not, at least in some cases, be explicitly defined by a user. For example, a composite data type, such as a "struct," can be considered an "object" where the operations on data are handled by another programming layer (for example, using basic elements of the programming language or program libraries). Objects can have different "types" (in other words, having different definitions), and instances of the object are created/instantiated using a definition of the corresponding object type.

An "artifact" refers to elements, which may be code or non-code, which assist in developing or executing software, and can include "objects," and can include data types (including abstract data types) or other types of "objects," or instances thereof, that are created by end users or computing processes without being directly programmed by a user. As an example, a user may create a definition of a "view" in a virtual data model using a user interface or "high level" commands. The view may be considered an object, and an instance of the view can be created, but the user did not directly write the code that implements the view. An artifact can be, for example, an instance of a composite data type.

The remainder of the present disclosure proceeds with a discussion of disclosed technologies using the example of "object," but unless otherwise indicated the discussion applies analogously to "data objects," "artifacts," or other types of content. More particularly, the discussion provides a specific example of objects used in database applications, such as database tables or views, entity types or views in a "virtual data model" that references the database tables or views (where, for example, the database tables or views store data, and the virtual data model objects can facilitate access to such data), and higher-level objects, such as "logical data objects" (as will be further described herein) or objects that are created to facilitate user/programmatic access to, and use/manipulation of, data from the database tables or views that is accessed using the virtual data model. As an example, a logical data object can be a "BusinessObject" as implemented in technologies available from SAP SE, of Walldorf, Germany, while examples of "virtual data models" include ABAP and CDS views, both available from SAP SE. Examples of database tables and views include those implemented in the HANA database system of SAP SE.

The objects can be interrelated by inherent relationships, or can be interrelated by defined relational rules ("defined relationships"). As described above, objects have data, including data that is specific to an "instance" of the object. For example, an object can be a database table that has a plurality of columns (where a column can also be implemented as an object) and a plurality of rows (where again a row can be an object, where the table object includes both row objects and column objects). Certain data members of an object can represent particular types of values that are common between object instances, such as when an object represents something in "real world" (like an "employee" or a "product"), but where the values differ between object instances. These types of data members can be referred to as "attributes" or "elements."

The specification proceeds with a discussion of different types of objects, how such objects can be implemented, and how various objects can be related to one another, in Examples 2-8. Examples 9-12 illustrate disclosed techniques for controlling access to objects using namespaces.

### Example 2 - Example Database Schema with Technical Relationships

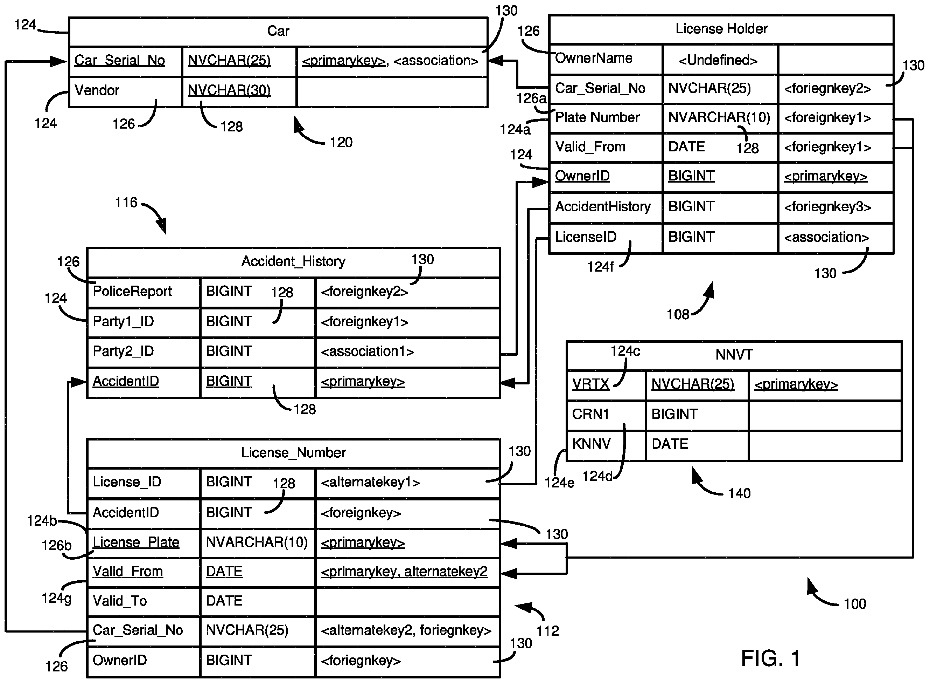

FIG. 1 is an example entity-relation (ER) type diagram illustrating a data schema 100 related to a driver's accident history. The schema 100 (which can be part of a larger schema, the other components not being shown in FIG. 1) can include a table 108 associated with a license holder (e.g., an individual having a driver's license), a table 112 associated with a license, a table 116 representing an accident history, and a table 120 representing cars (or other vehicles).

Each of the tables 108, 112, 116, 120 can include a plurality of fields 124. Each field 124 can be associated with technical information, such as a name or identifier 126, a datatype 128, and a flag or status indicator 130 indicating whether the field represents a primary key, indicates a foreign key relationship with another table, or indicates another type of technical relationship with another table. The flag 130 represents technical information that can be used to link two or more tables, including linking particular fields 124 of particular tables. The status indicator 130 can be an indicator of an inherent relationship between two tables (or, more generally, between two database objects).

Schema information with technical information is typically maintained in a database layer, such as a software layer where table values are maintained (e.g., in a RDBMS), and typically includes identifiers for the tables 108, 112, 116, 120, and the name 126 and datatype 128 of their associated fields 124. Schema information may also include at least some of the information conveyable using the flag 130, such as whether a field is associated with a primary key, or indicating a foreign key relationship. However, other relationships, including more informal associations, may not be included in a schema associated with a database layer (e.g., the INFORMATION_SCHEMA of PostgreSQL).

Database layer schema information typically does not include semantic information. Although, in the particular example shown, the fields 124 have names 126 that at least suggest the meaning of their content, in many database schemas, the fields do not have names which convey the meaning of a field. In any event, fields 124 having the same semantic information, or having at least some semantic information in common, may have different technical information. For example, field 124a has the name 126a of "Plate Number," which may or may not have the same semantic meaning as field 124b with the name 126b of "License Plate." A search of the database for information regarding "License Plate" may retrieve records associated with name 126b, but may miss records with the name 126a. The converse can also be true, where a search for "License Plate" may retrieve records from two tables, even though the term has different semantic meanings in the two fields. That is, two fields may have the same name by coincidence (or through a design that simply is not concerned about such redundancies).

Apart from missing some records that have overlapping or identical semantics, or retrieving records with different semantics, there is the question of how potentially relevant tables should be located. As discussed above, especially for large, complex database systems, it can be difficult for any particular user to be fully aware of the entire database schema. Technical users may have a better understanding of the technical nature of the database, but may lack insights into the meaning, or semantic information, of the data, in order to retrieve appropriate data from the database. Similarly, non-technical users may understand what information they want, but not how to get it, including not understanding the database schema or query languages. Although it may be possible to find some semantically related tables through technical relationships, such as foreign key relationships, such a search may fail to find some related tables, as well as falsely identifying tables as being semantically related simply are technically related.

FIG. 1 includes a table 140. The table 140 does not have a technical relationship with any other table in the portion of the schema 100 shown in FIG. 1. In addition, the fields 124c-124e have names that do not readily convey their meaning or purpose, or indicate whether they might have the same meaning or purpose as other fields 124 in the schema 100. For instance, field 124c may have the same semantic meaning as field 124a, field 124d may have the same meaning as field 124f, and field 124e may have the same meaning as field 124g.

### Example 3 - Example Table Elements Including Semantic Identifiers

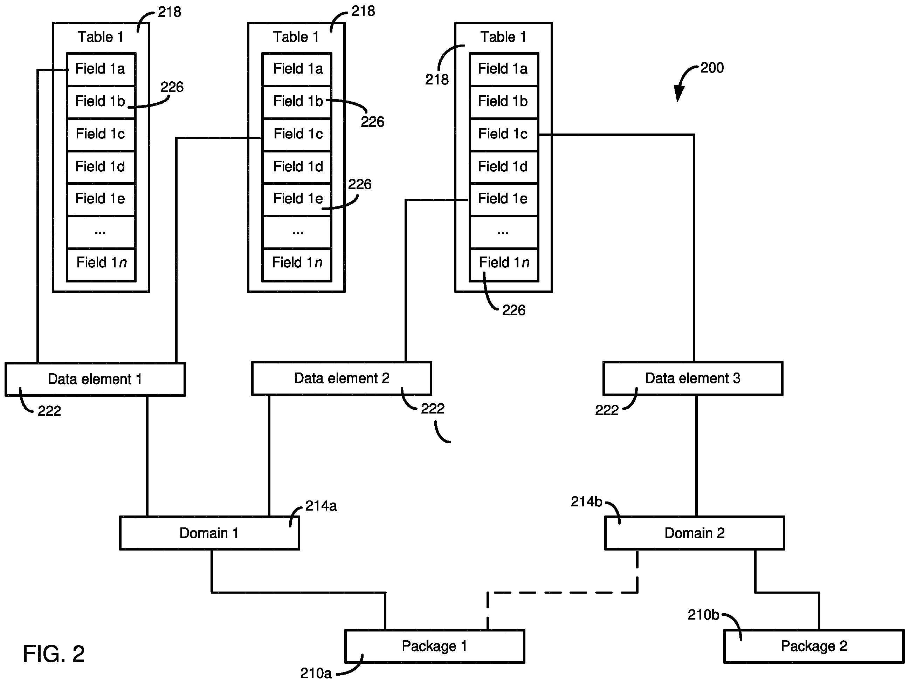

FIG. 2 is a diagram illustrating elements of a database schema 200 and how they can be interrelated. In at least some cases, the database schema 200 can be maintained other than at the database layer of a database system. That is, for example, the database schema 200 can be independent of the underlying database, including a schema used for the underlying database. Typically, the database schema 200 is mapped to a schema of the database layer (e.g., schema 100 of FIG. 1), such that records, or portions thereof (e.g., particular values of particular fields) can be retrieved through the database schema 200.

The database schema 200 can include one or more packages 210. A package 210 can represent an organizational component used to categorize or classify other elements of the schema 200. For example, the package 210 can be replicated or deployed to various database systems. The package 210 can also be used to enforce security restrictions, such as by restricting access of particular users or particular applications to particular schema elements.

A package 210 can be associated with one or more domains 214 (i.e., a particular type of semantic identifier or semantic information). In turn, a domain 214 can be associated with one or more packages 210. For instance, domain 1, 214a, is associated only with package 210a, while domain 2, 214b, is associated with package 210a and package 210b. In at least some cases, a domain 214 can specify which packages 210 may use the domain. For instance, it may be that a domain 214 associated with materials used in a manufacturing process can be used by a process-control application, but not by a human resources application. Domains can be, or can identify, a type of inherent relationship. Note that, for the present disclosure, "inherent" relationships can be either technical or semantic, provided they are definitional aspects of an object.

In at least some implementations, although multiple packages 210 can access a domain 214 (and database objects that incorporate the domain), a domain (and optionally other database objects, such as tables 218, data elements 222, and fields 226, described in more detail below) is primarily assigned to one package. Assigning a domain 214, and other database objects, to a unique package can help create logical (or semantic) relationships between database objects. In FIG. 2, an assignment of a domain 214 to a package 210 is shown as a solid line, while an access permission is shown as a dashed line. So, domain 214a is assigned to package 210a, and domain 214b is assigned to package 210b. Package 210a can access domain 214b, but package 210b cannot access domain 214a.

Note that at least certain database objects, such as tables 218, can include database objects that are associated with multiple packages. For example, a table 218, Table 1, may be assigned to package A, and have fields that are assigned to package A, package B, and package C. The use of fields assigned to packages A, B, and C in Table 1 creates a semantic relationship between package A and packages B and C, which semantic relationship can be further explained if the fields are associated with particular domains 214 (that is, the domains can provide further semantic context for database objects that are associated with an object of another package, rather than being assigned to a common package).

A domain 214 can represent the most granular unit from which database tables 218 or other schema elements or objects can be constructed. For instance, a domain 214 may at least be associated with a datatype. Each domain 214 is associated with a unique name or identifier, and is typically associated with a description, such as a human readable textual description (or an identifier than can be correlated with a human readable textual description) providing the semantic meaning of the domain. For instance, one domain 214 can be an integer value representing a phone number, while another domain can be an integer value representing a part number, while yet another integer domain may represent a social security number. The domain 214 thus can help provide common and consistent use (e.g., semantic meaning) across the schema 200. That is, for example, whenever a domain representing a social security number is used, the corresponding fields can be recognized as having this meaning even if the fields or data elements have different identifiers or other characteristics for different tables.

The schema 200 can include one or more data elements 222. Each data element 222 is typically associated with a single domain 214. However, multiple data elements 222 can be associated with a particular domain 214. Although not shown, multiple elements of a table 218 can be associated with the same data element 222, or can be associated with different data elements having the same domain 214. Data elements 222 can serve, among other things, to allow a domain 214 to be customized for a particular table 218. Thus, the data elements 222 can provide additional semantic information for an element of a table 218.

Tables 218 include one or more fields 226, at least a portion of which are mapped to data elements 222. The fields 226 can be mapped to a schema of a database layer, or the tables 218 can be mapped to a database layer in another manner. In any case, in some embodiments, the fields 226 are mapped to a database layer in some manner. Or, a database schema can include semantic information equivalent to elements of the schema 200, including the domains 214.

In some embodiments, one or more of the fields 226 are not mapped to a domain 214. For example, the fields 226 can be associated with primitive data components (e.g., primitive datatypes, such as integers, strings, Boolean values, character arrays, etc.), where the primitive data components do not include semantic information. Or, a database system can include one or more tables 218 that do not include any fields 226 that are associated with a domain 214. However, the disclosed technologies include a schema 200 (which can be separate from, or incorporated into, a database schema) that includes a plurality of tables 218 having at least one field 226 that is associated with a domain 214, directly or through a data element 222.

### Example 4 - Example Data Dictionary Components

Schema information, such as information associated with the schema 200 of FIG. 2, can be stored in a repository, such as a data dictionary. As discussed, in at least some cases the data dictionary is independent of, but mapped to, an underlying relational database. Such independence can allow the same database schema 200 to be mapped to different underlying databases (e.g., databases using software from different vendors, or different software versions or products from the same vendor). The data dictionary can be persisted, such as being maintained in a stored table, and can be maintained in memory, either in whole or part. An in-memory version of a data dictionary can be referred to as a dictionary buffer.

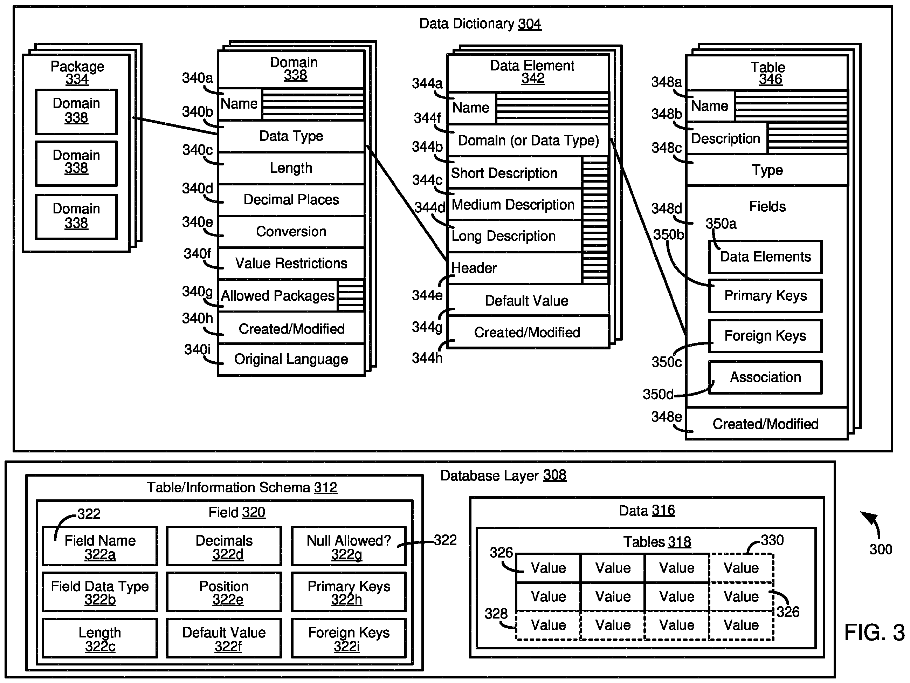

FIG. 3 illustrates a database environment 300 having a data dictionary 304 that can access, such as through a mapping, a database layer 308. The database layer 308 can include a schema 312 (e.g., an INFORMATION_SCHEMA as in PostgreSQL) and data 316, such as data associated with tables 318. The schema 312 includes various technical data items/components 322, which can be associated with a field 320, such as a field name 322a (which may or may not correspond to a readily human-understandable description of the purpose of the field, or otherwise explicitly describe the semantic meaning of values for that field), a field data type 322b (e.g., integer, varchar, string, Boolean), a length 322c (e.g., the size of a number, the length of a string, etc., allowed for values in the field), a number of decimal places 322d (optionally, for suitable datatypes, such as, for a float with length 6, specifying whether the values represent XX.XXXX or XXX.XXX), a position 322e (e.g., a position in the table where the field should be displayed, such as being the first displayed field, the second displayed field, etc.), optionally, a default value 322f (e.g., "NULL," "0," or some other value), a NULL flag 322g indicating whether NULL values are allowed for the field, a primary key flag 322h indicating whether the field is, or is used in, a primary key for the table, and a foreign key element 322i, which can indicate whether the field 320 is associated with a primary key of another table, and, optionally, an identifier of the table/field referenced by the foreign key element. A particular schema 312 can include more, fewer, or different technical data items 322 than shown in FIG. 3.

The tables 318 are associated with one or more values 326. The values 326 are typically associated with a field 320 defined using one or more of the technical data elements 322. That is, each row 328 typically represents a unique tuple or record, and each column 330 is typically associated with a definition of a particular field 320. A table 318 typically is defined as a collection of the fields 320, and is given a unique identifier.

The data dictionary 304 includes one or more packages 334, one or more domains 338, one or more data elements 342, and one or more tables 346, which can at least generally correspond to the similarly titled components 210, 214, 222, 218, respectively, of FIG. 2. As explained in the discussion of FIG. 2, a package 334 includes one or more (typically a plurality) of domains 338. Each domain 338 is defined by a plurality of domain elements 340. The domain elements 340 can include one or more names 340a. The names 340a serve to identify, in some cases uniquely, a particular domain 338. A domain 338 includes at least one unique name 340a, and may include one or more names that may or may not be unique. Names which may or may not be unique can include versions of a name, or a description, of the domain 338 at various lengths or levels of detail. For instance, names 340a can include text that can be used as a label for the domain 338, and can include short, medium, and long versions, as well as text that can be specified as a heading. Or, the names 340a can include a primary name or identifier and a short description or field label that provides human understandable semantics for the domain 338.

The domain elements 340 can also include information that is at least similar to information that can be included in the schema 312. For example, the domain elements 340 can include a data type 340b, a length 340c, and a number of decimal places 340d associated with relevant data types, which can correspond to the technical data elements 322b, 322c, 322d, respectively. The domain elements 340 can include conversion information 340e. The conversion information 340e can be used to convert (or interconvert) values entered for the domain 338 (including, optionally, as modified by a data element 342). For instance, conversion information 340 can specify that a number having the form XXXXXXXXX should be converted to XXX-XX-XXXX, or that a number should have decimals or commas separating various groups of numbers (e.g., formatting 1234567 as 1,234,567.00). In some cases, field conversion information for multiple domains 338 can be stored in a repository, such as a field catalog.

The domain elements 340 can include one or more value restrictions 340f. A value restriction 340f can specify, for example, that negative values are or are not allowed, or particular ranges or threshold of values that are acceptable for a domain 338. In some cases, an error message or similar indication can be provided as a value is attempted to be used with a domain 338 that does not comply with a value restriction 340f. A domain element 340g can specify one or more packages 334 that are allowed to use the domain 338.

A domain element 340h can specify metadata that records creation or modification events associated with a domain element 338. For instance, the domain element 340h can record the identity of a user or application that last modified the domain element 340h, and a time that the modification occurred. In some cases, the domain element 340h stores a larger history, including a complete history, of creation and modification of a domain 338.

A domain element 340i can specify an original language associated with a domain 338, including the names 340a. The domain element 340i can be useful, for example, when it is to be determined whether the names 340a should be converted to another language, or how such conversion should be accomplished.

Data elements 342 can include data element fields 344, at least some of which can be at least generally similar to domain elements 340. For example, a data element field 344a can correspond to at least a portion of the name domain element 340a, such as being (or including) a unique identifier of a particular data element 342. The field label information described with respect to the name domain element 340a is shown as separated into a short description label 344b, a medium description label 344c, a long description label 344d, and a header description 344e. As described for the name domain element 340a, the labels and header 344b-344e can be maintained in one language or in multiple languages.

A data element field 344f can specify a domain 338 that is used with the data element 342, thus incorporating the features of the domain elements 340 into the data element. Data element field 344g can represent a default value for the data element 342, and can be at least analogous to the default value 322f of the schema 312. A created/modified data element field 344h can be at least generally similar to the domain element 340h.

Tables 346 can include one or more table elements 348. At least a portion of the table elements 348 can be at least similar to domain elements 340, such as table element 348a being at least generally similar to domain element 340a, or data element field 344a. A description table element 348b can be analogous to the description and header labels described in conjunction with the domain element 340a, or the labels and header data element fields 344b-344e. A table 346 can be associated with a type using table element 348c. Example table types include transparent tables, cluster tables, and pooled tables, such as used in database products available from SAP SE of Walldorf, Germany.

Tables 346 can include one or more field table elements 348d. A field table element 348d can define a particular field of a particular database table. Each field table element 348d can include an identifier 350a of a particular data element 342 used for the field. Identifiers 350b-350d, can specify whether the field is, or is part of, a primary key for the table (identifier 350b), or has a relationship with one or more fields of another database table, such as being a foreign key (identifier 350c) or an association (identifier 350d).

A created/modified table element 348e can be at least generally similar to the domain element 340h.

### Example 5 - Example Metadata Model

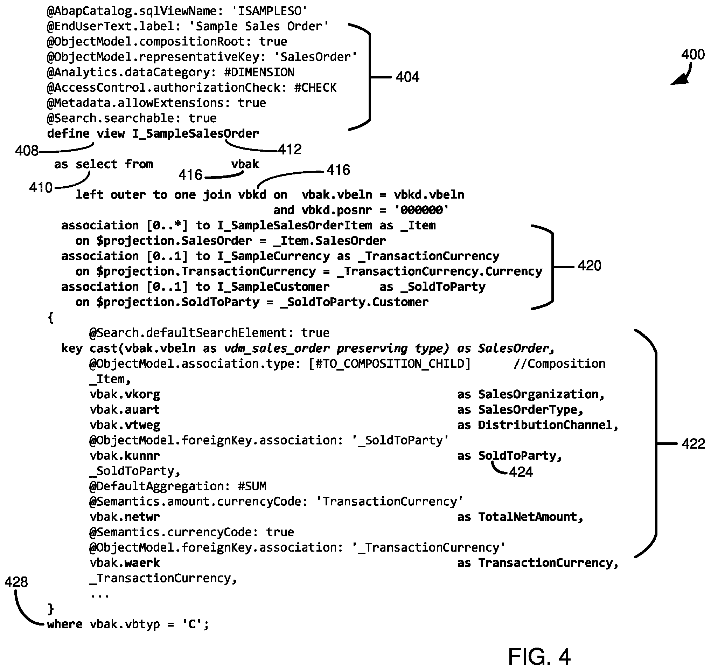

FIG. 4 illustrates a definition of a metadata model 400. The metadata model 400, in particular, represents a view, such as a Core Data Services view of SAP SE, of Walldorf, Germany. The metadata model 400 can include a variety of different components, at least some of which can be considered to be metadata models. That is, the metadata model 400 can be a model that is based at least in part on multiple sub-models. The sub-models can specify particular aspects of the overall metadata model 400.

The metadata model 400 can optionally include one or more annotations 404. An annotation can be a metadata component that can be added to a metadata model. For example, a provider may supply a base model, and individual users or customers may wish to add metadata that is specific to their operating environment and use cases. The ability to add annotations can thus enhance usability by allowing for custom metadata elements, without impacting other users of a base metadata model. Annotations can be specified for different software layers or frameworks.

In the example shown, annotations 404 can be indicated as annotations using particular syntax elements, such as by preceding an annotation with the "@" symbol. In at least some cases, annotations 404 can also be indicated by placing them in the appropriate portion of a metadata model, such as in a header section or another section designated for annotations. In some cases, annotations 404 can reference other metadata models, such as a metadata model of a data source, or can reference a data source that is associated with a metadata model. In either event, such an association 404 can create a dependency between the metadata model 400 and the other metadata model/data source.

The metadata model 400 can include instructions 408, in this case a SQL statement 410, defining a core metadata model/object having an identifier 412 (which can be used, for example to later access or activate, such as to instantiate, the metadata model). In particular, the instructions 408 shown define a view. The annotations 404 further specify properties of the view, as do other portions of the metadata model 400 that will be further described.

The instructions 408 can specify one or more data sources 416. Data sources 416 can define data to which at least a portion of the metadata of the metadata model 400 will apply, and can also supply additional metadata for the metadata model 400. Note that the metadata model 400 can be, in at least a sense, dependent on referenced data sources 416. For example, if the metadata model 400 relies on particular expected data or metadata of a data source 416, the metadata model may be unusable, have performance issues, or provide incorrect results if the referenced data sources do not include expected data or metadata, or are otherwise inconsistent with how the data source is used in the metadata model. As shown, the data sources 416 includes two tables, "vbak" and "vbkd." These tables will typically include metadata features such as one or more fields, where each field is associated with a data type, designations of a primary key, and optionally associations with other database components, such as association or foreign key relationships with other database tables.

The metadata model 400 can optionally include specifications of one or more associations 420. An association 420 can define a relationship to another entity. An association 420 can be processed during the use of the metadata model 400, such as being converted to a SQL expression such as a JOIN. Unlike other conditions or elements that are included in the metadata model 400, associations can define a relationship that can at least in some cases be optional, such as being selectively activated depending upon how the metadata model is accessed. For example, an association 420 can be converted to a JOIN condition that uses a table provided in a SELECT statement that references the metadata model 400.

The metadata model 400 can include one or more components 422 that specify how data retrieved using the metadata model should be processed, including to generate values that are associated with other metadata elements of the metadata model. Processing can include calculating values, such as using a formula specified in, or referenced by, the metadata model 400. In particular, a processing component 422 can specify that a particular field value should be treated as an element 424. Thus, the metadata model 400 can include dependencies on how elements are defined, and the metadata model 500 may not be accurate, or useable, if the element definition does not match how it is used, and intended to be used, in the metadata model 400.

The metadata model 400 can optionally include additional components, such as one or more conditions 428, or other operations, such as aggregations, unions, etc., including such operations that are typically supported by a database query language. In addition to instantiated artefacts, information about the artefacts can be stored in a persistency model, such as one or more database tables. An example persistency model that can be used with artefacts is disclosed in U.S. Patent Application No. 16/387,983, filed April 18, 2019, and incorporated by reference herein.

### Example 6 - Example Metadata Model, Including Relationships with Other Metadata Models

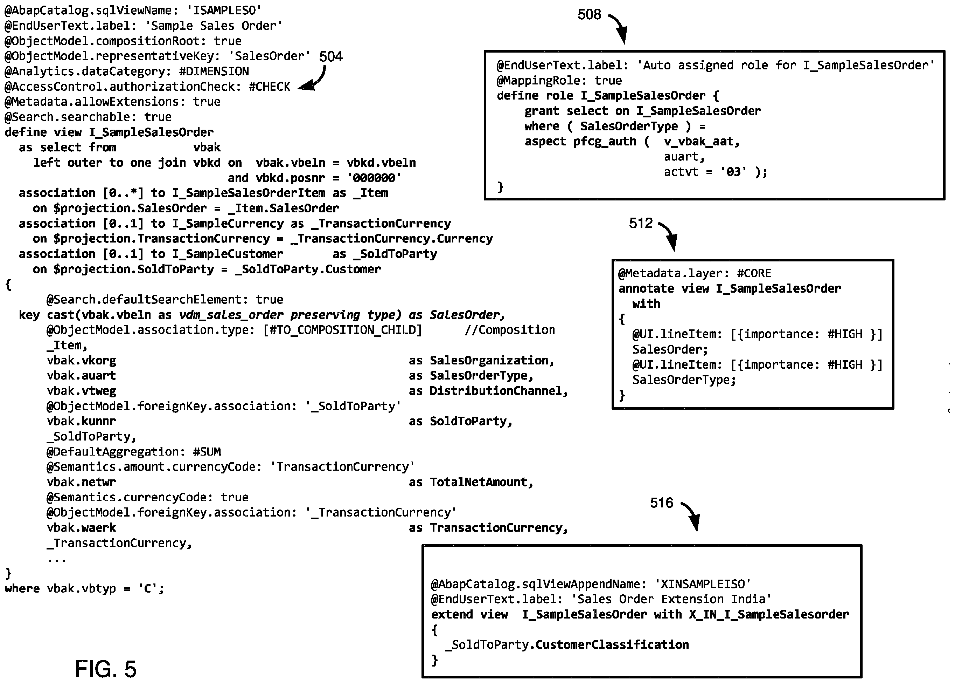

FIG. 5 illustrates how metadata models may have dependencies on other metadata models. In particular, FIG. 5 shows a view metadata model 504, which can be the metadata model 400 of FIG. 4. FIG. 5 also illustrates a metadata model 508 for an access control object (such as a DCLS, or data control language source), a metadata model 512 for a metadata extension object (such as a DDLX, or metadata extension), and a metadata model 516 for an extension element object (such as a DDLS, or data definition language source).

The access control object metadata model 508 can be used for restricting access to data that can be retrieved using the view metadata model 504. For example, the view metadata model 504 and the access control object metadata model 508 can be processed together when the view metadata model 504 is activated, such as to generate SQL commands that retrieve data for the view metadata model, but which are filtered or restricted based on the access control object metadata model. As the access control object metadata model 508 references the view metadata model 504, the access control object metadata model depends on the view existing, and on the view containing elements specified in the access control object metadata model. For example, the access control object metadata model references the "SalesOrderType" element of the view "I_SampleSalesOrder" and the authorization object "V_VBAK_AAT" with its authorization field "AUART." Thus, the first element would be undefined or unusable if the corresponding element did not exist in the view metadata model 504.

### Example 7 - Example Computing Environment Having Virtual Data Model Interacting with Database System

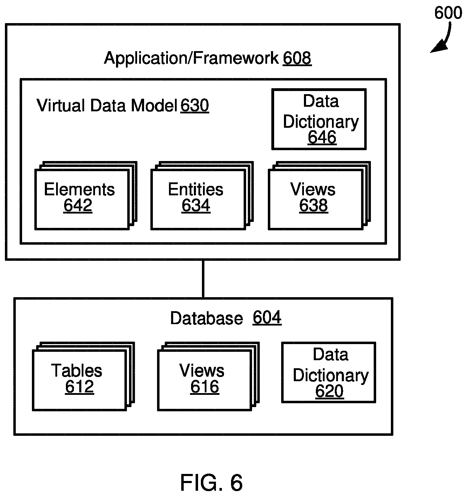

FIG. 6 illustrates an example computing environment 600 in which disclosed technologies can be implemented. At a high level, the computing environment 600 includes a database system 604 that can communicate with an application or framework layer 608. The database system 604 includes data that can be used by the application/framework layer 608, or applications that communicate with the application/framework layer. The data can be stored in one or more tables 612 of the database 608. The data can be referenced by one or more views 616, which can be view definitions or materialized views (which can then also correspond to tables 612). A data dictionary 620 can store information regarding the tables 612 and the views 616.

The application/framework layer 608 includes a virtual data model 630. The virtual data model 630 can include entities 634 and views 638, which can at least generally correspond to the tables 612 and the views 616 of the database 608. However, as has been described, as compared with the tables 612 and views 616, artefacts in the virtual data model 630 are typically associated with additional information, such as semantic information or information that can be used to manipulate data in one or more artefacts of the database 608 that corresponds to a given artefact in the virtual data model. The virtual data model 630 can include information regarding elements 642, which can correspond to attributes or fields used in the entities 634 and views 638. At least some of the elements 642 can correspond to fields used in the database 604, but are enriched with additional information. Information regarding the entities 634, views 638, and elements 642 can be stored in a data dictionary 646 of the virtual data model 630.

### Example 8 - Example Logical Data Object Schema

In any of the Examples described herein, a logical data object can be a specific example of an object in an object-oriented programming approach. However, unless the context specifically indicates otherwise, aspects of the present disclosure described with respect to logical data objects can be applied to other types of objects, or other types of data collections. For example, a database table, or a group of related tables, can have fields that are analogous to data members of an object. Functions that correspond to member functions of an object can be defined to perform operations on the tables.

A logical data object can contain a definition of a hierarchical data structure and definitions of one or more operations that can be performed using portions of the hierarchical data structure. In some cases, a logical data object may be referred to as a "business object" and can take any number of forms including business intelligence or performance management components such as those implemented in software technologies of SAP BusinessObjects, ORACLE Hyperion, IBM Cognos, and others. However, the use of logical data objects in computer applications is not limited to "business" scenarios. Logical data objects can be used to define a particular application and/or problem domain space. Aspects and artifacts of a given problem domain can be defined using the hierarchical data structure and various portions of these aspects and/or artifacts can be associated directly with definitions of relevant logical operations. A logical data object can be an artefact of a virtual data model, or can be constructed with reference to artefacts of a virtual data model. In turn, components of the virtual data model can be mapped to another data model, such as a physical data model of a relational database system.

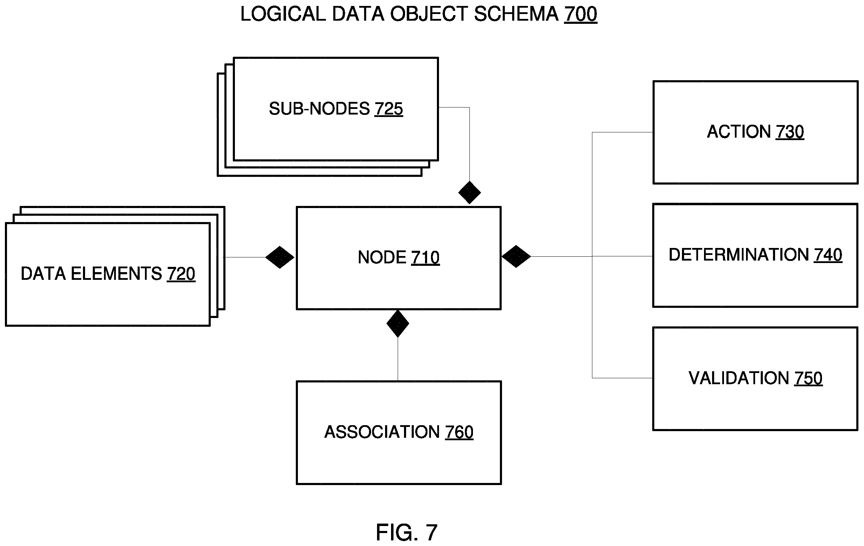

FIG. 7 is a diagram of an example logical data object schema 700. A node 710 can contain one or more data elements 720 (i.e., variables, such as data members). A data element 720 can contain an identifier, such as a name, and an associated value. The identifier can, for example, be associated with a field of a particular database table. In at least some embodiments, the data element 720 can be associated with a data type that restricts and/or validates the type of data that can be stored as a value of the data element 720.

The node 710 can contain one or more child nodes 725 (also referred to as sub-nodes), which can themselves contain additional data elements 720 (and other node components, including sub-nodes 725). Combinations of sub-nodes 725 can be used to define a hierarchical data structure of multiple nodes 710. In at least some embodiments, the hierarchical data structure can contain a root node that does not have a parent-node and can be used as an entry point for traversing the hierarchical data structure.

Each node 710 in the logical data object can be associated with one or more actions 730. An action 730 can comprise a definition for a logical operation that can be performed using the node 710 with which it is associated. The action 730 can contain an identifier that can be used to invoke the action's logical operation. Each node 710 in the logical data object can be associated with one or more determinations 740. A determination 740 can contain a definition for a logical operation that can be automatically executed when a trigger condition is fulfilled. Example trigger conditions can include a modification of the associated node 710, a modification of the data element 720 of the associated node, the creation of a data element 720 of the associated node, etc. A logical operation defined by an action 730, or a determination 740, can comprise instructions to create, update, read, and/or delete one or more data elements 720 and/or one or more sub-nodes 725. Actions 730 or determinations 740 can be set to trigger, in some cases, upon the occurrence of a particular date (e.g., a particular date or a particular time on a particular date).

Each node 710 in the logical data object schema 700 can be associated with one or more validations 750. A validation 750 can contain a definition of one or more data integrity rules and/or checks. The one or more data integrity rules and/or checks can be performed when the associated node 710, and/or one or more data elements 720 of the associated node, are created, modified, and/or deleted. Any such operation that does not satisfy the one or more data integrity rules and/or checks can be rejected.

Each node 710 in the logical data object schema 700 can be associated with one or more nodes from one or more other logical data objects (having the same schema or a different schema) by one or more associations 760. An association 760 can contain an identifier for a node in another logical data object that is associated with the node 710. Associations 760 can be used to define relationships among nodes in various logical data objects. The association 760, in at least some embodiments, contains an association type indicator that identifies a type of association between the node 710 and the node in the other logical data object.

Although the action 730 is defined and associated with the node 710, when the action 730 is invoked, it targets an identified instance of the node 710 with which it is associated. Similarly, a determination 740 and/or validation 750 can be defined and associated with a node 710, but can target an instance of the associated node 710 when it/they is/are invoked. Multiple instances of a given logical data object can be created and accessed independently of one another. Actions 730, determinations 740, or validations 750 may correspond to member functions of a data object, such as implemented in a C++ class.

Although the instances of the logical data object share a common schema 700, the data values stored in their respective node instances and data element instances can differ, as can the logical data object instances that are associated by the associations 760. Additionally, or alternatively, an instance of an association 760 can identify a particular instance of an associated node in another logical data object instance. The identifier of a node instance can be an alphanumeric string that uniquely identifies the instance and, in at least some cases, can be used to look the instance up and/or retrieve data associated with the instance. Particular examples of identifiers include numerical values and universally unique identifiers. However, other types of identifiers are also possible.

Various actions may be performed using logical data objects including create, update, delete, read, and query operations. If the requested operation is a read operation, the data payload may contain a unique identifier associated with a logical data object instance to be retrieved. Processing a read operation request can comprise searching for an instance of the logical data object that is associated with the provided unique identifier in a data store, and retrieving all or part of a matching logical data object instance's data from the data store. If the requested operation is an update operation, the data payload may contain one or more values to be assigned to data element instances of an existing logical data object instance. The data payload may also contain a unique identifier associated with the logical data object instance to be updated. Processing an update operation request can comprise searching for a logical data object instance in a data store associated with the provided unique identifier and updating the matching logical data object instance with the provided data values.

### Example 9 - Example Computing Environments and Sharing of Namespaces and Associated Modelled Content Therebetween

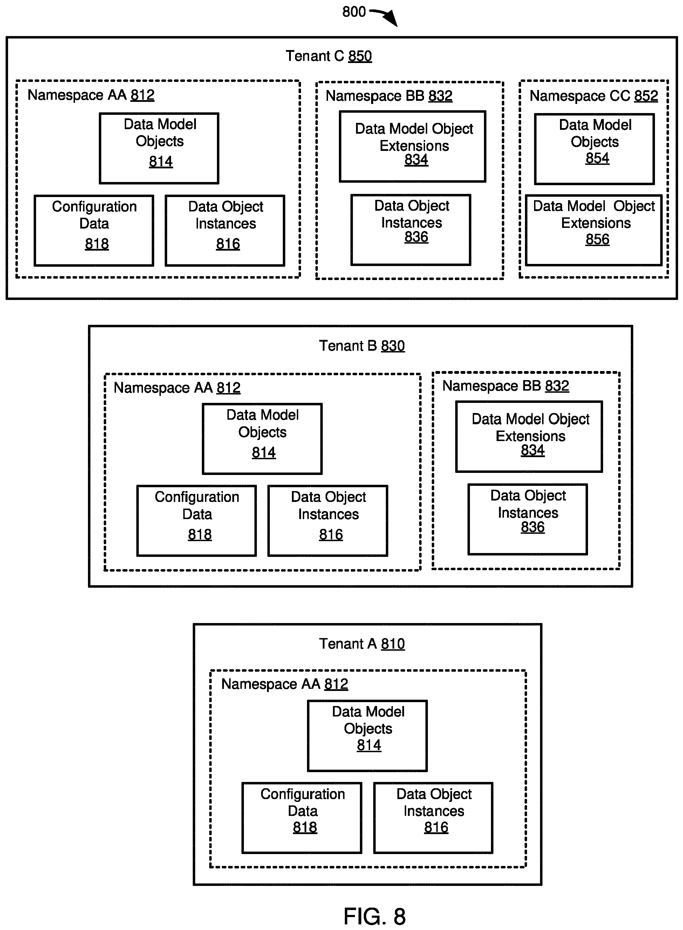

FIG. 8 illustrates a computing environment 800 that has a plurality of tenants 810, 830, 850 that include one or more namespaces, as well as different types of objects that can be included within a namespace. The tenants 810, 830, 850 can represent a scenario where tenant 810 represents a software company that develops "base" applications, tenant 830 represents a third party that provides enhancements for a base application, and tenant 850 represents a customer whose users use the base application and enhancements, including associated objects, of the tenants 810 and 830.

Tenant 810 is shown as including a namespace 812 that includes a plurality of object types, including data model objects 814, instances 816 of data model objects, and configuration data 818. The tenant 830 includes the namespace 812, as well as a namespace 832, which can include data model objects 834 that have been added to a use scenario for the data objects of the namespace 812, or extensions 836 to the data model objects 814 of the namespace 812.

The ability of users of the tenant 830 to perform actions with respect to the namespaces 812, 832 can differ. The tenant 830 can be considered the "owner" of the namespace 832, and can thus perform all CRUD operations with respect to the objects 834, 836. However, as described in Example 1, in some cases the ability of extensions 836 to modify the data model objects 814 can depend on both the permissions associated with the namespace 812 and any underlying implementing technologies. Although the tenant 830 by default controls access to the namespace 832, optionally the tenant can set up restrictions for all or a portion of the users of the tenant 830. For example, only developers working on a software application associated with the namespace 832 may be given full CRUD access to the namespace, while other users may not be able to access the namespace, or may be restricted to less than full CRUD access.

In contrast, since the tenant 830 is not the source of the namespace 812, it may have less than full CRUD access to the namespace 812. So, tenant 830 illustrates how a tenant can have multiple namespaces, and use restrictions can differ between namespaces associated with objects available at a given computing system.

As mentioned above, tenant 850 can represent a customer that purchased both a "base" software application (or simply objects useable by another software application) and extensions or additional data object created by the tenant 830. Thus, tenant 850 is shown as having both namespaces 812 and 832 available. Since tenant 850 is not the owner/source of namespace 812 or 832, the tenant may be limited to reading content of those namespaces, or performing create, update, or delete operations only as permitted by the owner of the respective namespace.

However, tenant 850 itself has its own namespace 852, which includes additional data model objects 854 and extensions 856, which can extend either the data model objects 814, the data model objects 834, or the data model objects 854. Since the tenant 850 is the creator/owner of the namespace 852, it can have full access to the namespace, or can define its own access restrictions for the namespace, both for "internal" users (or tenants) and for "external" users (or tenants).

### Example 10 - Example Namespaces and Namespace Registries

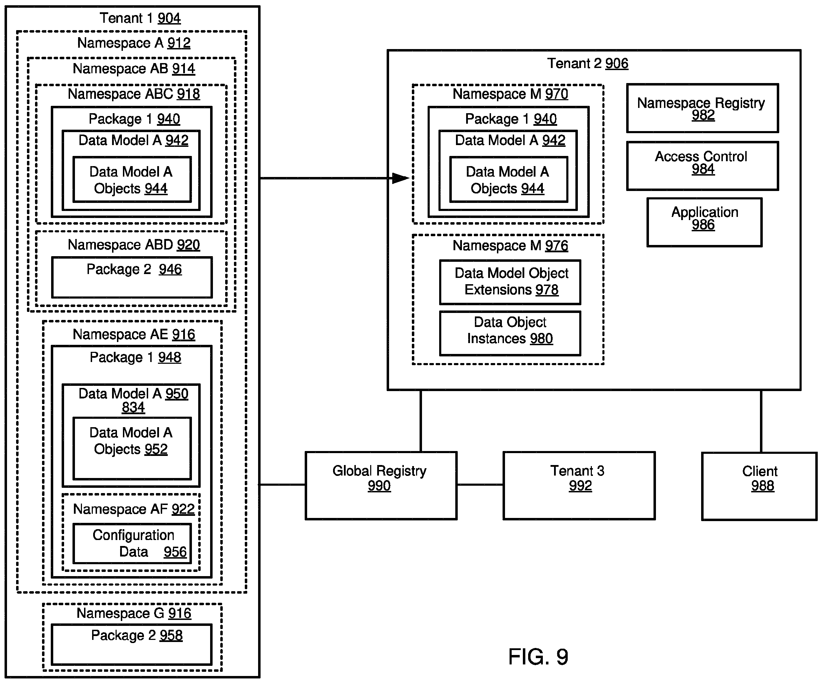

FIG. 9 illustrates a computing environment 900 that includes a plurality of tenants 904, 906, as well as a client 910. Tenant 904 can represent a software company, while tenant 906 can illustrate a customer of the software company. Of course, the tenants 904, 906 need not be tied to any particular "role," and in general disclosed techniques are not limited to any particular number of tenants, or relationships therebetween.

Tenant 904 illustrates how namespaces can exist on a plurality of different levels, including having namespaces nested within other namespaces. Because namespaces are typically associated with a tenant, it can be beneficial to have a namespace that is unique to that tenant. In the case of entity 904, namespace 912 provides an overall namespace for the tenant. While an overall namespace, such as namespace 912, can have its own objects, FIG. 9 illustrates the namespace 912 as not including specific content, but rather as an overall container for a plurality of other namespaces 914, 916, 918, 920, 922. Namespaces 914, 916 are also more general namespaces, which can be used for organizing content under yet further namespaces, although these namespaces can also include additional content.

In practice, typically access rights will be applied for the most granular namespace available. For example, namespace 918 can first be analyzed for access rights. If no restrictions are found, namespace 914 can be analyzed. If no restrictions are found there, namespace 912 can be analyzed. Information about a namespace hierarchy can be maintained to help facilitate such analysis. In other cases, a namespace can explicitly include a specification of access rights for all content of a namespace, in which case fallback logic may not be needed.

Namespace 914 includes two namespaces 918, 920 that define packages, where a package can include one or more objects of one or more object types, as described in conjunction with FIG. 8. In particular, namespace 918 includes a package 940, which includes objects 944 for a data model 942. Namespace 920 includes a package 946, which contains objects, but where the objects are not shown to simplify presentation. Packages may serve as software deployment units, such as containing content in a specific subject matter area.

Namespace 916 also serves to organize data objects at a package level, having a single package 948. The package 948 includes objects 952 for a data model 950. The package 948 also includes configuration data 956, such as in the form of database tables, which are organized under a further namespace 922 that is nested within the namespace 916 (which in turn is nested within the namespace 912).

Namespace 916 includes a package 958 (which can include various objects, which are not shown for convenience of presentation), but a separate namespace has not been created for the package.

As will be further described, an advantage of nested namespaces is that they can allow for different levels of access to different objects. Typically, a most granular/lowest level namespace will control access restrictions to objects of that namespace. For example, if namespace 912 specified that objects in that namespace were not editable, but namespace 918 specified that objects were editable, then data objects in namespace 918 would be editable, but objects outside of that namespace would not be editable (unless they were also in a namespace that was nested within namespace 912 that provided greater access, or some exception to normal namespace behavior applied).

Typically, when a tenant creates a namespace (or, more specifically, a suitably authorized user of the tenant), that namespace is fully controllable by that tenant, including all CRUD operations. On the other hand, if objects in a namespace are imported into a system, default behavior can be that imported namespaces are not editable. That is, objects and any associated data can be read, but not modified (including deletions). Depending on implementation, extensions to existing objects, or the creation of new objects, can be allowed or prohibited.

Consider a scenario where package 940 is imported into tenant 906. Information about the namespace 918 for the package 940 at tenant 904 (and its parent namespaces 912, 914) may not be available to tenant 906. However, logic associated with namespace management at the tenant 906 can recognize that the package has been imported, as opposed to being created at the tenant 906 initially, and therefore can be associated with a namespace 970 that restricts access to objects 944 in the package 940. A namespace identifier to be used for the namespace 970 can be included in the package 940, or can be an identifier assigned by the tenant 906.

Tenant 906 can have its own modelled content, such as data model object extensions 978 and data object instances 980 that are configured to be used with objects 944 in the package 940. Since these objects were created by the tenant 906, they can be located in a separate namespace 976, where the tenant 906 has full CRUD access to the objects in the namespace 976. So, in some implementations, default rules for namespace creation/addition at a particular tenant (in a multitenant computing environment, where for purposes of the disclosed techniques a tenant can be treated as equivalent to an tenant) or discrete installation (or computing system) can be (1) content that is imported into a system is assigned to a namespace, where the definition of the namespace is also imported or obtained in some manner, and that namespace is associated with restricted access; and (2) content that is created in a system is assigned to a namespace and that namespace is associated with unrestricted (or at least less restricted) access. In terms of importing, the rule can be applied on the level of packages (such as repository packages), and so a new package is assigned to a new namespace, while additions/updates to an already-imported package are assigned to the original namespace.

Namespace information for a particular tenant/computing system can be maintained in a namespace registry, such as the namespace registry 982 for the tenant 906. Although not shown, the tenant 904 can also include a namespace registry.

In practice, access control logic 984 can be used to determine if actions with respect to objects associated with a namespace in the namespace registry 982 are permitted. If an application 986, such as in response to a request by the client 910, makes a request to delete or modify an object (or in some cases add an object), the access control logic 984 can determine a namespace associated with the data object and then use the namespace registry 982 to determine whether the action is permitted. If the action is permitted, the requested process can continue, otherwise an error can be returned. Note that, as used herein, "access controls" refers to create, update, or delete operations. That is, it is generally presumed that by providing objects in a namespace a tenant having the namespace will at least have read rights to such objects.

As has been discussed, information included in a namespace registry can differ depending on implementation, such as having an assignment of objects to namespaces being part of the namespace registry 982, or where the namespace registry lists access rights for namespaces, but where information about a namespace to which an object is assigned is located elsewhere, such as in a definition or description of the object. In this case, the access control logic 984 can access, or cause to be accessed, information about the object definition or description to determine a namespace assigned to the object, and then the access control logic can look up the namespace in the namespace registry 982 to determine whether the action is permitted.

As can be seen from FIGS. 8 and 9, many tenants can have namespaces. It can be useful to have a central repository where namespaces can be registered, as shown in FIG. 9 as a global namespace registry 990. The tenants 904, 906, as well as a tenant 992, can access the global namespace registry, including to list new namespaces, modify properties of namespaces, or delete namespaces, to which they have suitable access rights, and to obtain namespace information. For example, assume that tenant 906 imports the package 940. The package 940 can include an identifier of the namespace 918 (and optionally parent namespaces, including as a "path" used in the identifier of the namespace 918). Initially, since the package 940 was imported into tenant 906, the namespace 970 can be set to restricted access. After installation, the tenant 906, such as using the namespace registry 982 or the access control logic 984, can contact the global namespace registry 990 to obtain more specific access control information for the namespace. Or, during an installation process, the tenant 906 can contact the global namespace registry 990 to determine how permissions should be set.

Another advantage of the global namespace registry 990 can be to detect namespace collisions so multiple tenants do not use the same identifier for different namespaces. In the case of nested namespaces, it is typically desirable that at least a "root" namespace is unique, so that the overall namespace and any nested namespaces within are also unique, while namespaces under the root can be the same between different namespaces. So, it may be permissible to have namespaces of "SAP/manufacturing" and "Partner/manufacturing," but two tenants should not have the same top-level namespace of "SAP." If a collision is detected, the system can optionally not register the namespace and return an error in response to the request, or can assign a different name (such as adding "_1," "_2" to a name), or add a higher-level, "root" namespace, to either an existing namespace or a namespace being added.

At this point, it should be noted that namespace information can be associated with data objects in the namespace in a variety of ways. In one implementation, namespace information can be included in an identifier/name/key for a particular object. So, assume a tenant has a data object "View A" in namespace "SAP/production." The key for "View A" can be "SAP/production/View A". The key can be included in a definition of the data object. Since the information is in part of the definition of a data object, a data object of a different namespace would by nature refer to a different object. For example, if a "partner" also had a "View A," the key of the object would be "Partner/production/View A", and would be a different object than "SAP/production/View A". In other cases, in addition to, or in place of, including a namespace as part of an object key, it can otherwise be maintained as part of a definition of a data object (such as in a "namespace" attribute). Or, a registry can have entries for a namespace for data objects in the namespace.

The global namespace registry 990 can be periodically polled by the tenant 906 to determine if any access rights have changed, or the global namespace registry can push such updates to the tenant 906. Even in the case where namespace information is maintained in a definition or description of an object, the combination of the global namespace registry 990 and the namespace registry 982 allow access controls for objects to be easily modified, since changes need only be made to the namespace registry 982, and the access control logic 984 can take appropriate actions with respect to objects using current information in the namespace registry 982.

### Example 11 - Example Namespace Registry Information

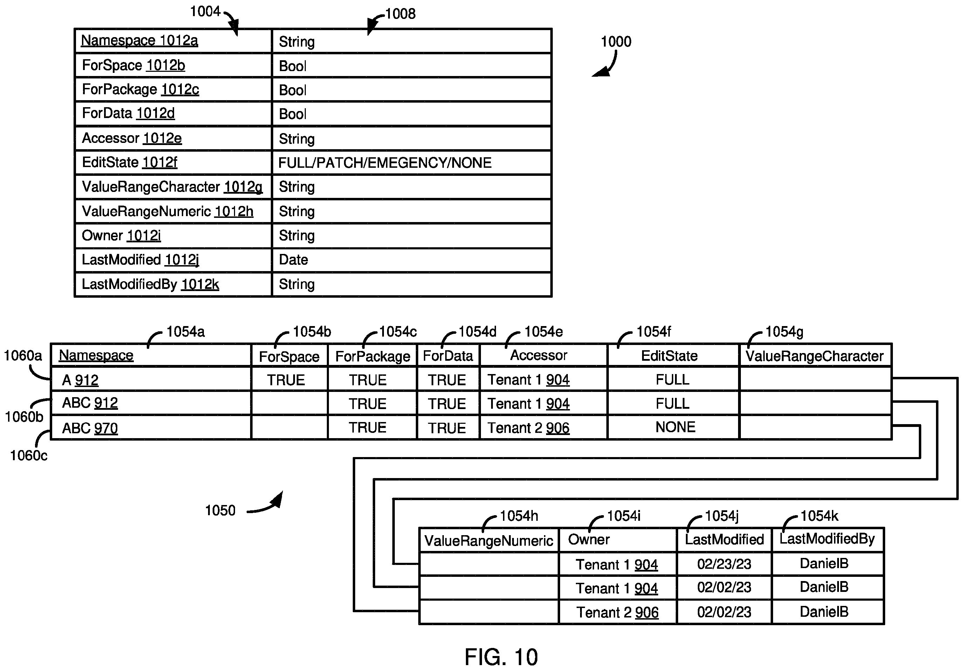

FIG. 10 illustrates example information that can be maintained in a namespace registry, such as the namespace registry 982 or the global namespace registry 990 of FIG. 9. Table 1000 illustrates various attributes of the namespace. The table 1000 can serve as the definition of a table in which namespace data is stored, or the information can be stored in another manner, such as in one or more instances of an abstract or composite datatype, as JSON objects, or in another suitable manner.

In table 1000, column 1004 provides an identifier of a particular attribute 1012 (shown as attributes 1012a-1012k), while column 1008 provides an example datatype that can be used with the corresponding attribute. Many of the attributes 1012 can be optional. Typically, a namespace will at last include an attribute 1012a, which provides a name or other identifier for a namespace, and an attribute 1012f, which provides an edit state for the namespace. When used at a particular tenant, as opposed to a global namespace registry, the value of the attribute 1012f indicates the edit state for that tenant. During process execution, logic, such as the access control logic 984 of FIG. 9, can consult values for the attributes 1012a, 1012f, and determine whether a particular action is allowed or prohibited.

A variety of values can be provided for attribute 1012f. Typically, the list of values includes a value that indicates that objects of the corresponding namespace are freely accessible (for all CRUD operations) and a value that indicates that objects of the corresponding namespace are not accessible, at least for operations other than read operations. However, more granular access rights can be provided. For instance, a value of the attribute 1012f can provide that objects are extendable or non-extensible.

Or, a value of the attribute 1012f can provide temporary access to objects in the namespace. For instance, consider a situation where a software issue (including a content-related issue) has been identified, but a software company has not produced an official update or patch. The value of the attribute 1012f can be modified to provide another tenant, who did not create the objects/namespace, with permission to create or modify objects to resolve the issue. The emergency state can be manually removed (reset to an original state), or can be set to expire after a period of time. Since the tenant that developed the objects for the affected namespace is the owner, that tenant can later overwrite any such emergency changes. That is, since the owner tenant controls the namespace, the owner tenant can force changes to any object modifications made by the non-owner tenant during the emergency period.

Another possible value for the attribute 1012f is "patch." Patch access may be granted to allow a tenant to perform otherwise prohibited create, update, or delete operations, provided that particular rules such as patching rules, are complied with. Limiting the types of changes that can be made during a "patch" mode can help ensure that patch operations do not introduce new runtime issues. For example, it may be desirable to prohibit changes to dependencies between package, to table definitions, or deletions of elements or entities (whether tables or view). On the other hand, it may be permitted to add new views, or to add new elements to existing views, including views that are exposed for outside consumption. When content changes are requested, the patch rules can be consulted to determine whether a particular change should be executed.

As noted in the discussion of FIG. 9, namespaces can be nested, such that an "inner" namespace can override rules of an "outer" namespace, for example. Namespaces can otherwise be set to apply at only certain levels/particular types of content, such as only applying to data object definitions, only applying to data object instances, only applying to configuration data, and so on. Attributes 1012b-1012d illustrate how the applicability of a namespace can be specified. The attributes 1012b-1012d can be associated with Boolean values. Attribute 1012b indicates whether a particular namespace applies to "spaces," an attribute 1012c indicates whether the namespace applies to packages, and an attribute 1012d indicates whether the namespace applies to data, such as configuration data. Namespace 914 of FIG. 9 can be an example of a "space," which acts as a kind of container for other namespaces, although optionally such spaces can contain objects.

Attribute 1012e can make an entry in a namespace registry specific to a particular "accessor" or group of accessors, where an "accessor" is a source of a request for registry information or actions regarding objects in a namespace, or to entries in the registry. In particular, an "accessor" can be a particular tenant. For instance, consider the scenario where a software company makes a base product, which can be enhanced or modified by third party companies, and the combined content made available to end users. Values for the attribute 1012e can allow differing types of access to be granted to different parties, whose computing environments form different tenants. While the attribute 1012e can be useful in a global namespace registry, similar considerations can make the attribute useful even in a "local" namespace registry, such as providing differing access to different development groups within a company.

Some objects can be associated with data, either as content-specific data associated with a data object in a data model or configuration. It may be desirable to allow more fine-grained control over such data, such as specifying access rights to particular primary key values. Accordingly, for data content of a namespace, attribute 1012g allows such values to be specified in a namespace definition as a range of characters, while attribute 1012h allows such values to be specified as a numeric range. The attributes 1012g, 1012h can also be used to validate namespaces, such as to confirm that the same data is not being included within two different namespaces.

As a further example, in some cases an object can have a primary key that is defined as a number, and so it may not be possible to include character-based namespace information in the key. In these situations, a numerical value range for the data can be used as an indirection to locate key values (and thus corresponding objects) associated with a particular namespace. As another example, it may be possible to include a character-based namespace in a key field, but the field may be too short to accommodate the compound key. In this case, value ranges can be specified as character ranges, where the character values refer to specific objects in the namespace. Note that in these cases, it may not be possible for two namespaces to include the same value ranges/objects, even if the namespaces have different access settings.

Attribute 1012i allows an owner or source of the namespace to be specified. Among other things, the attribute 1012i can be used to restrict changes to entries in the namespace registry to the owner of the namespace. Attributes 1012j, 1012k allow, respectively, for the specification of a date a namespace was last modified or the specification of a user or process making such modification (which can include the act of adding a namespace, as well as in some cases deleting a namespace entry, where in such cases the table 1000 can include a deletion flag or similar information to indicate that information listed for a namespace is associated with a deleted entry).

FIG. 10 illustrates a table 1050 having a format defined by the table 1000, where the table 1050 has columns 1054a-1054k corresponding to the attributes 1012a-1012k. The rows of the table 1050 correspond to a portion of the namespaces of FIG. 9. Row 1060a corresponds to information for namespace 912. In this scenario, namespace 912 is only available at the tenant 904, and so the table 1050 only includes a single entry for this namespace (although, as mentioned, multiple rows could be provided if tenant 904 has multiple accessors for that namespace). The values in columns 1054b-1054d indicate that the namespace applies to spaces, packages, and data. Since the namespace 912 was created by the tenant 904, the value for the column 1054f indicates that the tenant (indicated in column 1054e) has full access privileges for the namespace.

Rows 1060b and 1060c correspond to the namespace 918 of the tenant 904 and the namespace 970 of tenant 906. In this example, both rows 1060b, 1060c include the name ("ABC") in column 1054a, which is the name of the namespace 918 at the tenant 904. Alternatively, row 1060c could use the value of "M," the value shown for namespace 970 of the tenant 906.

Since rows 1060b, 1060c refer to the same namespace, just at different locations/accessed by different accessors, most of the values are the same for the rows, including the values for the columns 1054b-1054d. Since the namespace 1060b is within another namespace, it does not apply at the space level, but does apply for packages and for data within the package. Values for column 1054i indicate that tenant 904 is the owner of the namespace, and the rows 1060b, 1060c include the same modification information for the attributes 1054j, 1054k. A main difference between the rows 1060b, 1060c is in the values for the column 1054f, where tenant 904 has full edit rights and tenant 906 has no edit rights.

### Example 12 -Example Operations of Disclosed Techniques

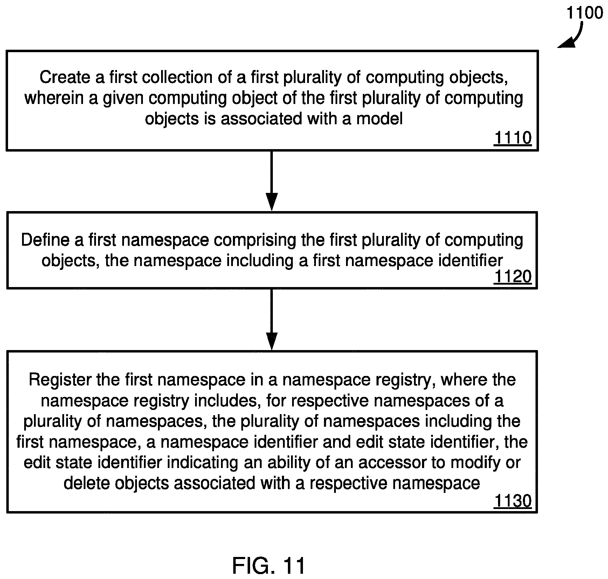

FIG. 11 illustrates a process 1100 of defining a namespace and registering the namespace in a namespace registry. The namespace and namespace registry can have the properties described with respect to FIG. 10.

At 1110, a first collection of a first plurality of computing objects is created. A given computing object of the first plurality of computing objects is associated with a model. A first namespace is defined at 1120, the first namespace including the first plurality of computing objects and a first namespace identifier. At 1130, the first namespace is registered in a namespace registry. The namespace registry includes, for respective namespaces of a plurality of namespaces, the plurality of namespaces including the first namespace, a namespace identifier and edit state identifier. The edit state identifier indicates an ability of an accessor to modify or delete objects associated with a respective namespace.

### Example 13 - Computing Systems

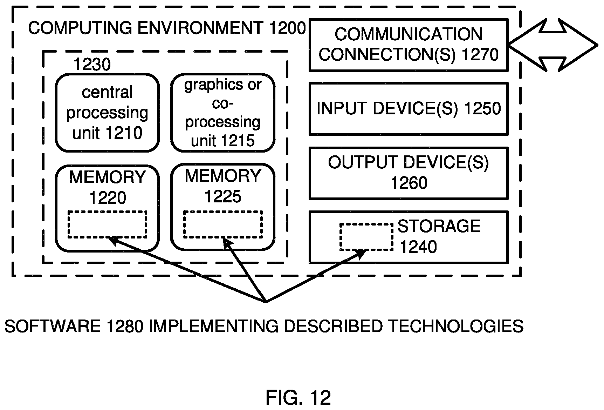

FIG. 12 depicts a generalized example of a suitable computing system 1200 in which the described innovations may be implemented. The computing system 1200 is not intended to suggest any limitation as to scope of use or functionality of the present disclosure, as the innovations may be implemented in diverse general-purpose or special-purpose computing systems.

With reference to FIG. 12, the computing system 1200 includes one or more processing units 1210, 1215 and memory 1220, 1225. In FIG. 12, this basic configuration 1230 is included within a dashed line. The processing units 1210, 1215 execute computer-executable instructions, such as for implementing components of the processes of the present disclosure. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 12 shows a central processing unit 1210 as well as a graphics processing unit or co-processing unit 1215. The tangible memory 1220, 1225 may be volatile memory (e.g., registers, cache, RAM), non-volatile memory (e.g., ROM, EEPROM, flash memory, etc.), or some combination of the two, accessible by the processing unit(s) 1210, 1215. The memory 1220, 1225 stores software 1280 implementing one or more innovations described herein, in the form of computer-executable instructions suitable for execution by the processing unit(s) 1210, 1215. The memory 1220, 1225, may also store settings or settings characteristics, databases, data sets, interfaces, displays, object instances, or model.

A computing system 1200 may have additional features. For example, the computing system 1200 includes storage 1240, one or more input devices 1250, one or more output devices 1260, and one or more communication connections 1270. An interconnection mechanism (not shown) such as a bus, controller, or network interconnects the components of the computing system 1200. Typically, operating system software (not shown) provides an operating environment for other software executing in the computing system 1200, and coordinates activities of the components of the computing system 1200.

The tangible storage 1240 may be removable or non-removable, and includes magnetic disks, magnetic tapes or cassettes, CD-ROMs, DVDs, or any other medium which can be used to store information in a non-transitory way, and which can be accessed within the computing system 1200. The storage 1240 stores instructions for the software 1280 implementing one or more innovations described herein.

The input device(s) 1250 may be a touch input device such as a keyboard, mouse, pen, or trackball, a voice input device, a scanning device, or another device that provides input to the computing system 1200. The output device(s) 1260 may be a display, printer, speaker, CD-writer, or another device that provides output from the computing system 1200.

The communication connection(s) 1270 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc., that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 14 - Cloud Computing Environment

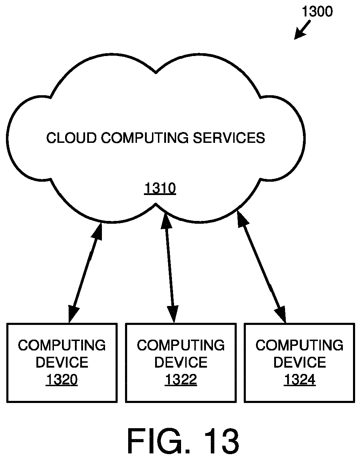

FIG. 13 depicts an example cloud computing environment 1300 in which the described technologies can be implemented. The cloud computing environment 1300 comprises cloud computing services 1310. The cloud computing services 1310 can comprise various types of cloud computing resources, such as computer servers, data storage repositories, networking resources, etc. The cloud computing services 1310 can be centrally located (e.g., provided by a data center of a business or organization) or distributed (e.g., provided by various computing resources located at different locations, such as different data centers and/or located in different cities or countries).

The cloud computing services 1310 are utilized by various types of computing devices (e.g., client computing devices), such as computing devices 1320, 1322, and 1324. For example, the computing devices (e.g., 1320, 1322, and 1324) can be computers (e.g., desktop or laptop computers), mobile devices (e.g., tablet computers or smart phones), or other types of computing devices. For example, the computing devices (e.g., 1320, 1322, and 1324) can utilize the cloud computing services 1310 to perform computing operations (e.g., data processing, data storage, and the like).

### Example 15 - Implementations

Although the operations of some of the disclosed methods are described in a particular, sequential order for convenient presentation, it should be understood that this manner of description encompasses rearrangement, unless a particular ordering is required by specific language set forth. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 12, computer-readable storage media include memory 1220 and 1225, and storage 1240. The term computer-readable storage media does not include signals and carrier waves. In addition, the term computer-readable storage media does not include communication connections (e.g., 1270).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. It should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one hardware processor;
at least one memory coupled to the at least one hardware processor; and
one or more computer-readable storage media storing computer-executable instructions that, when executed, cause the computing system to perform operations comprising:
creating a first collection of a first plurality of computing objects, wherein a given computing object of the first plurality of computing objects is associated with a model;
defining a first namespace comprising the first plurality of computing objects, the namespace comprising a first namespace identifier; and
registering the first namespace in a namespace registry, wherein the namespace registry comprises, for respective namespaces of a plurality of namespaces, the plurality of namespaces comprising the first namespace, a namespace identifier and edit state identifier, the edit state identifier indicating an ability of an accessor to modify or delete objects associated with a respective namespace.

2. The computing system of claim 1, wherein the creating a first collection is carried out as part of a process of importing the computing objects from another computing environment and the operations further comprise:
in response to the importing setting the edit state identifier for the first namespace to read only access.

3. The computing system of claim 2, the operations further comprising:
receiving an update to the edit state identifier for the first namespace, the update providing at least partial editing rights to the first namespace for a defined period of time, where the edit state identifier for the first namespace automatically returns to read only access upon an expiration of the defined period of time, and/or
wherein the first namespace identifier is included with the first plurality of computing objects as part of the process of importing the first plurality of computing objects, and/or
wherein the operations further comprising:
creating a second collection of a second plurality of computing objects, wherein a given computing object of the second plurality of computing objects is associated with a model;
defining a second namespace comprising the second plurality of computing objects, the second namespace comprising a second namespace identifier; and
registering the second namespace in the namespace registry, wherein the edit state identifier specifies is set to provide full access to the namespace.

4. The computing system of any one of claims 1 to 3, wherein the namespace comprises a range of object primary key values for objects included in the first namespace.

5. The computing system of any one of claims 1 to 4, the operations further comprising:
sending a request to a global namespace registry to register the first namespace in the global namespace registry, wherein the request comprises the first namespace identifier, and optionally,
wherein the request specifies an accessor identifier and an edit state identifier setting access rights to the first namespace for an accessor associated with the accessor identifier.

6. The computing system of any one of claims 1 to 5, the operations further comprising:
creating a second namespace, the second namespace having a second namespace identifier, wherein the first namespace is a subspace of the second namespace.

7. The computing system of claim 6, wherein the first namespace is associated with a repository package, and/or
wherein a third namespace forms another subspace of the second namespace.

8. The computing system of claim 6, wherein a value of the edit state identifier of the second namespace is different than a value of the edit state identifier of a third namespace, and/or
wherein a value of the edit state identifier of the second namespace indicates that the second namespace cannot be modified by a first user of the second namespace and the value of the edit state identifier of the first namespace indicates that the second namespace, including the computing objects within the first namespace, can be modified by the first user.

9. The computing system of any one of claims 1 to 8, the operations further comprising:
receiving a request from a first user to modify a computing object of the first namespace or data associated therewith;
consulting the namespace registry to determine whether the first user is allowed to modify the computing object or data;
determining that the first user is authorized to modify the computing object or data; and
processing the request.

10. The computing system of any one of claims 1 to 9, wherein the edit state identifier of the first namespace indicates that a first user has read only access to the first namespace, the operations further comprising:
receiving a request from the first user to modify a computing object of the first namespace or data associated therewith;
consulting the namespace registry to determine whether the first user is allowed to modify the computing object or data;
determining that the first user is not authorized to modify the computing object or data; and
in response to the determining that the first user is not authorized to modify the computing object or data, not processing the request.

11. The computing system of any one of claims 1 to 10, wherein the first namespace identifier is included in a definition or description of respective computing objects of the first plurality of computing objects.

12. The computing system of any one of claims 1 to 11, wherein the namespace registry comprises entries for respective computing objects of the first plurality of computing objects, the entries associating respective computing objects of the first plurality of computing objects with the first namespace identifier.

13. The computing system of any one of claims 1 to 12, the operations further comprising:
prior to the creating a first collection, receiving a user request to create the first namespace.

14. A method, implemented in a computing system comprising at least one hardware processor and at least one memory coupled to the at least one hardware processor, the method comprising:
creating a first collection of a first plurality of computing objects, wherein a given computing object of the first plurality of computing objects is associated with a model; defining a first namespace comprising the first plurality of computing objects, the first namespace comprising a first namespace identifier; and
registering the first namespace in a namespace registry, wherein the namespace registry comprises, for respective namespaces of a plurality of namespaces, the plurality of namespaces comprising the first namespace, a namespace identifier and edit state identifier, the edit state identifier indicating an ability of an accessor to modify or delete objects associated with a respective namespace.

15. One or more computer-readable storage media comprising:
computer-executable instructions that, when executed by a computing system comprising at least one hardware processor and at least one memory coupled to the at least one hardware processor, cause the computing system to create a first collection of a first plurality of computing objects, wherein a given computing object of the first plurality of computing objects is associated with a model;
computer-executable instructions that, when executed by the computing system, cause the computing system to define a first namespace comprising the first plurality of computing objects, the first namespace comprising a first namespace identifier; and
computer-executable instructions that, when executed by the computing system, cause the computing system to register the first namespace in a namespace registry, wherein the namespace registry comprises, for respective namespaces of a plurality of namespaces, the plurality of namespaces comprising the first namespace, a namespace identifier and edit state identifier, the edit state identifier indicating an ability of an accessor to modify or delete objects associated with a respective namespace.
